# EUROPÄISCHE PATENTSCHRIFT

(11) **EP 2 217 078 B1**
(45) Veröffentlichungstag und Bekanntmachung des Hinweises auf die Patenterteilung: **13.04.2011**
(21) Anmeldenummer: 08802662.0
(22) Anmeldetag: 23.09.2008
(51) Int. Cl.: A22C 25/14

(54) **VORRICHTUNG ZUM AUFNEHMEN UND FIXIEREN VON FISCHEN INNERHALB EINER EINRICHTUNG ZUM VERARBEITEN VON FISCHEN**
DEVICE FOR RECEIVING AND FIXING FISH WITHIN A DEVICE FOR PROCESSING FISH
DISPOSITIF POUR PRENDRE EN CHARGE ET IMMOBILISER DES POISSONS DANS UN SYSTÈME DE TRAITEMENT DE POISSONS

(30) Priorität: 02.10.2007 DE 102007048176
(43) Veröffentlichungstag der Anmeldung: 18.08.2010
(73) Patentinhaber: Nordischer Maschinenbau Rud. Baader GmbH + Co. KG, 23560 Lübeck (DE)
(72) Erfinder: OSTROWSKY, Peter, 23730 Neustadt (DE)
(74) Vertreter: Wenzel & Kalkoff
(86) Internationale Anmeldenummer: PCT/EP2008/008212
(87) Internationale Veröffentlichungsnummer: WO 2009/046889

(56) Entgegenhaltungen:
- EP-A- 0 710 445
- WO-A-99/13731
- WO-A-02/063967
- US-A- 2 685 360

## Beschreibung

### Beschreibung

Die Erfindung betrifft eine Vorrichtung zum Aufnehmen und Fixieren von Fischen innerhalb einer Einrichtung zum Verarbeiten von Fischen, umfassend eine Rumpfklemmung sowie eine aus mindestens zwei Anschlägen gebildete Brustflossenaufnahme, wobei die Rumpfklemmung aus einer Aufnahmeposition in eine Klemmposition und umgekehrt bringbar ist.

Derartige Vorrichtungen kommen insbesondere in der Fisch verarbeitenden Industrie zum Einsatz und dienen dazu, die zu bearbeitenden Fische während der Bearbeitung in einer definierten Position zu halten. Für die Bearbeitung bzw. Verarbeitung der Fische ist es nämlich von großer Bedeutung, dass die Fische z.B. beim Kehlen, beim Köpfen, beim Öffnen der Bauchhöhle etc. in einer definierten Position, vorzugsweise ausgestreckt in ihrer Längserstreckung, liegen und gehalten werden. Insbesondere kommt die Vorrichtung in Verbindung mit Kopfauflagen und/oder einer Kopfklemmung zum Einsatz, um den Fisch über seine gesamte Länge zu stützen und zu fixieren, wobei zwischen der Vorrichtung zum Aufnehmen und Fixieren der Fische einerseits und der Kopfauflage/Kopfklemmung andererseits üblicherweise ein ungestützter Bereich existiert. Die Kombination von Vorrichtung zum Aufnehmen und Fixieren der Fische und der Kopfauflage/Kopfklemmung andererseits ist jedoch nicht zwingend.

Es sind Vorrichtungen zum Aufnehmen und Fixieren von Fischen mit den Merkmalen des Oberbegriffes des Anspruches 1 bekannt. Eine solche Vorrichtung ist beispielsweise der WO 02/063967 zu entnehmen. Die darin gezeigte Vorrichtung zum Aufnehmen und Fixieren der Fische ist Bestandteil einer Vorrichtung zum Schlachten. Die Vorrichtung zum Schlachten umfasst mehrere eine Fischaufnahmetrommel bildende Fischaufnahmen. Die umlaufend angetriebene Fischaufnahmetrommel bewegt die in den Fischaufnahmen fixierten Fische von einer Bearbeitungsstation zur nächsten. Selbstverständlich kann die Vorrichtung zum Aufnehmen und Fixieren von Fischen auch als Einzelelement ausgebildet oder Bestandteil in anderen Vorrichtungen, Maschinen oder dergleichen sein.

Bei der aus der WO-Schrift bekannten Vorrichtung zum Aufnehmen und Fixieren der Fische werden die Fische mit dem Rücken voraus, Kopf nach rechts in die still stehende Fischaufnahme gelegt, wobei die Rumpfklemmung während des Einlegens (Aufnahmeposition) maximal geöffnet ist, so dass der Fisch zunächst nur durch die Brustflossenaufnahme gehalten wird. Für den Fall, dass eine Kopfauflage/Kopfklemmung vorgesehen ist, liegt der Kopf des Fisches ohne Klemmung lose auf der Kopfauflage. Ansonsten würde der Kopf des Fisches frei "hängen". Nach einer Betätigung wird die Rumpfklemmung zur Fixierung des eingelegten Fisches geschlossen (Klemmposition). Der Fisch ist dann im Bereich des Rumpfes vom Schwanz aus gesehen vor den Brustflossen fixiert. Mit anderen Worten liegen die Fische nach dem Einlegen in die gattungsgemäße Vorrichtung vom Schwanz bis zu den Bauchflossen ausgerichtet entlang ihrer Längserstreckung. Bei Verwendung einer Kopfauflage/Kopfklemmung ist auch der Bereich des Kopfes unterstützt. Die Fische können jedoch aus unterschiedlichen Gründen, beispielsweise dem Frischegrad, einer in der Leichenstarre gebildeten Verformung oder dergleichen flexibel, fest, weich, gekrümmt etc. sein, wodurch der Bereich ausgehend von den Brustflossen in Richtung des Kopfes bzw. der Bereich zwischen der bekannten Rumpfklemmung und der Kopfauflage gerade nicht in Längserstreckung des Fisches ausgerichtet ist. Dieser Effekt kann durch äußere Umstände, wie z.B. starken Seegang, noch verstärkt werden. Ein nicht vollständig ausgerichteter Fisch erschwert jedoch die nachfolgende Bearbeitung/Verarbeitung.

Es ist daher Aufgabe der vorliegenden Erfindung, eine Vorrichtung zum Aufnehmen und Fixieren von Fischen zu schaffen, die eine durchgängige und sichere Fixierung der Fische in Richtung ihrer Längserstreckung gewährleistet.

Diese Aufgabe wird durch eine Vorrichtung mit den eingangs genannten Merkmalen dadurch gelöst, dass ein zusätzliches Mittel zur Fixierung des Fischrumpfes vorgesehen ist. Dadurch wird auf einfache und zuverlässige Weise eine vollständige Fixierung des Fisches sicher gestellt, so dass der Fisch unabhängig von seiner Konsistenz, seinem Zustand seiner Form etc. stets in optimaler Weise ausgerichtet ist.

Eine zweckmäßige Weiterbildung sieht vor, dass das Mittel zwei Klemmbügel umfasst, wobei die beiden Klemmbügel auf entgegen gesetzten Seiten des Fisches angeordnet sind. Dadurch wird der Fisch im Bereich des Rumpfes gleichmäßig in Längserstreckungsrichtung fixiert.

Vorteilhafterweise ist das zusätzliche Mittel derart ausgebildet und eingerichtet, dass es vom Schwanz eines zu klemmenden Fisches aus gesehen hinter den Brustflossen am Fischrumpf anliegt. Damit wird auf besonders effektive Weise der Bereich zwischen dem Rumpf und dem Kopf des Fisches, der unabhängig von der Verwendung einer Kopfauflage bisher ungestützt ist, sicher gestützt und fixiert. Mit anderen Worten ermöglicht diese Ausbildung, dass auch Fische, die beispielsweise durch eine Deformation in der Leichenstarre gerade nicht in Richtung der Längserstreckung liegen, in die gewünschte Position gedrückt und in dieser gehalten werden.

Vorzugsweise ist die Rumpfklemmung aus einer Rückenauflage und zwei Seitenbacken gebildet. Damit ist die Fixierung des Rumpfes vom Schwanz aus gesehen vor den Brustflossen besonders sicher möglich.

Eine bevorzugte Weiterbildung zeichnet sich dadurch aus, dass die Klemmbügel starr mit den Seitenbacken verbunden sind, derart, dass die Klemmbügel durch die Seitenbacken zwangsgesteuert sind. Damit wird sicher gestellt, dass der Fischrumpf an unterschiedlichen Positionen gleichmäßig und gleichzeitig geklemmt wird.

Eine bevorzugte Ausführungsform ist dadurch gekennzeichnet, dass jeder Klemmbügel aus einem Stützarm und einem Klemmelement gebildet ist, wobei das Klemmelement an die Kontur der Fischrümpfe angepasst ist. Damit ist ein Ausweichen des Fisches bzw. Fischrumpfes erschwert, wodurch die ideale Fixierungsposition sicher und zuverlässig erreicht werden kann.

Weitere vorteilhafte und/oder zweckmäßige Merkmale und Ausgestaltungen ergeben sich aus den Unteransprüchen und der Beschreibung. Eine besondere bevorzugte Ausführungsform wird anhand der beigefügten Zeichnung näher erläutert. In der Zeichnung zeigt:
- Fig. 1: eine Seitenansicht einer Vorrichtung zum Aufnahmen und Fixieren von Fischen mit einer Kopfauflage,
- Fig. 2: eine Seitenansicht eines zusätzlichen Klemmbügels, und
- Fig. 3: eine Vorderansicht des Klemmbügels gemäß Figur 2.

Die in der Zeichnung gezeigte Vorrichtung dient zum Aufnehmen und Fixieren eines Fisches innerhalb einer Einrichtung zum Verarbeiten von Fischen. Diese Einrichtung umfasst üblicherweise mehrere solcher Vorrichtungen. Diese Vorrichtungen, die auch als Fischaufnahmen bezeichnet werden, sind kreisförmig angeordnet und bilden eine umlaufend angetriebene Fischaufnahmetrommel. Selbstverständlich kann die Vorrichtung auch zum Aufnehmen und Fixieren anderer Produkte und als separate Einzelvorrichtung ausgebildet sein.

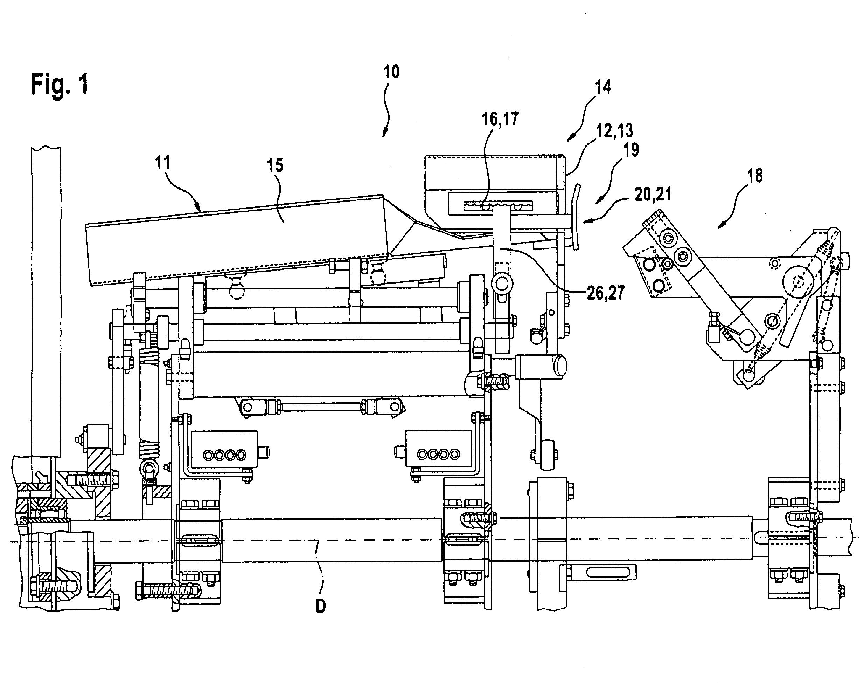

In der Figur 1 ist eine solche einzelne Vorrichtung 10 im Überblick dargestellt. Die Vorrichtung 10 umfasst eine Rumpfklemmung 11 sowie eine aus mindestens zwei Anschlägen 12, 13 gebildete Brustflossenaufnahmen 14. Die Rumpfklemmung 11, deren Aufbau, Ausbildung und Funktion selbstverständlich variieren kann, ist aus einer Aufnahmeposition für die Fische in eine Klemmposition und umgekehrt bringbar bzw. bewegbar. Beispielhaft ist die Rumpfklemmung 11 aus einer Rückenauflage 15 und zwei Seitenbacken 16, 17 gebildet. Die Rückenauflage 15 und die Seitenbacken 16, 17 stehen untereinander in Wirkverbindung und bilden ein so genanntes Dreibackenfutter. Die Betätigungsmittel können auf verschiedene Weise ausgebildet sein. In der beschriebenen Ausführungsform wird die Rumpfklemmung 11 durch Rotation der durch mehrere Vorrichtungen 10 gebildete Fischaufnahmetrommel aus der Aufnahmeposition in die Klemmposition gebracht. Dabei wird die Rückenauflage 15 durch die Seitenbacken 16, 17 zwangsgesteuert. Anders ausgedrückt bewegen sich die Seitenbacken 16, 17 zum Fixieren des Fisches aufeinander zu. Durch die Bewegung der Seitenbacken 16, 17 wird die Rückenauflage 15 zwangsläufig angehoben. Durch die synchronisierte Bewegung der Seitenbacken 16, 17 einerseits und die Rückenauflage 15 andererseits befindet sich die Mittelgräte des Fisches unabhängig von der Fischgröße etwa auf derselben Höhe. Wie bereits erwähnt, kann die Rumpfklemmung 11 aber auch auf andere bekannte Art und Weise ausgebildet sein. Die Brustflossenaufnahme 14 bzw. die entsprechenden Anschläge 12, 13 sind zu beiden Seiten des einzulegenden Fisches angeordnet, derart, dass sie einander gegenüber liegen. Sie dienen dazu, den einzulegenden Fisch in seiner Längsrichtung zu positionieren. Mit anderen Worten wird der Fisch mit seinen Bauchflossen in Schwanzrichtung gegen die Anschläge 12, 13 gedrückt. In der gezeigten Ausführung ist des Weiteren eine Kopfstützeinheit 18 bestehend aus Kopfauflage und Kopfklemmung vorgesehen, die beabstandet zur Vorrichtung 10 auf der gemeinsamen Achse angeordnet ist. Die Kopfstützeinheit 18 ist jedoch nur optional dargestellt und nicht zwingend erforderlich.

Neben der beschriebenen Rumpfklemmung 11 weist die Vorrichtung 10 ein zusätzliches Mittel 19 zur Fixierung des Fischrumpfes auf. Das Mittel 19 zur Fixierung kann einteilig oder mehrteilig ausgebildet sein. Des Weiteren besteht die Möglichkeit, dass das Mittel 19 unabhängig von der Rumpfklemmung 11 steuerbar bzw. betätigbar ist oder mit dieser in Wirkverbindung steht. In der dargestellten Vorrichtung 10 umfasst das Mittel 19 zwei Klemmbügel 20, 21, wobei die beiden Klemmbügel 20, 21 auf entgegen gesetzten Seiten des Fisches angeordnet sind. Die beiden Klemmbügel 20, 21 sind derart ausgebildet und eingerichtet, dass sie vom Schwanz eines zu klemmenden Fisches aus gesehen hinter den Brustflossen am Fischrumpf anliegen. Anders ausgedrückt greifen die Klemmbügel 20, 21 am Fischrumpf in einem Bereich zwischen den Seitenbacken 16, 17 und einer optionalen Kopfeinheit 18 an.

In der gezeigten Ausführungsform sind die Klemmbügel 20, 21 starr mit den Seitenbacken 16, 17 verbunden. Die feste Verbindung kann durch Schraubverbindung, Schweißverbindung oder auf andere übliche Art sichergestellt sein. Durch die feste Verbindung sind die Klemmbügel 20, 21 durch die Seitenbacken 16, 17 zwangsgesteuert. Das bedeutet, dass die Klemmbügel 20, 21 jede Bewegung der korrespondierenden Seitenbacke 16, 17 synchron mitmacht. Die Klemmbügel 20, 21 können auch unabhängig von den Seitenbacken 16, 17 an der Vorrichtung 10 angeordnet sein, wobei die Bewegungen von Klemmbügel 20, 21 einerseits und Seitenbacke 16, 17 andererseits auf andere übliche Weise synchronisiert werden kann.

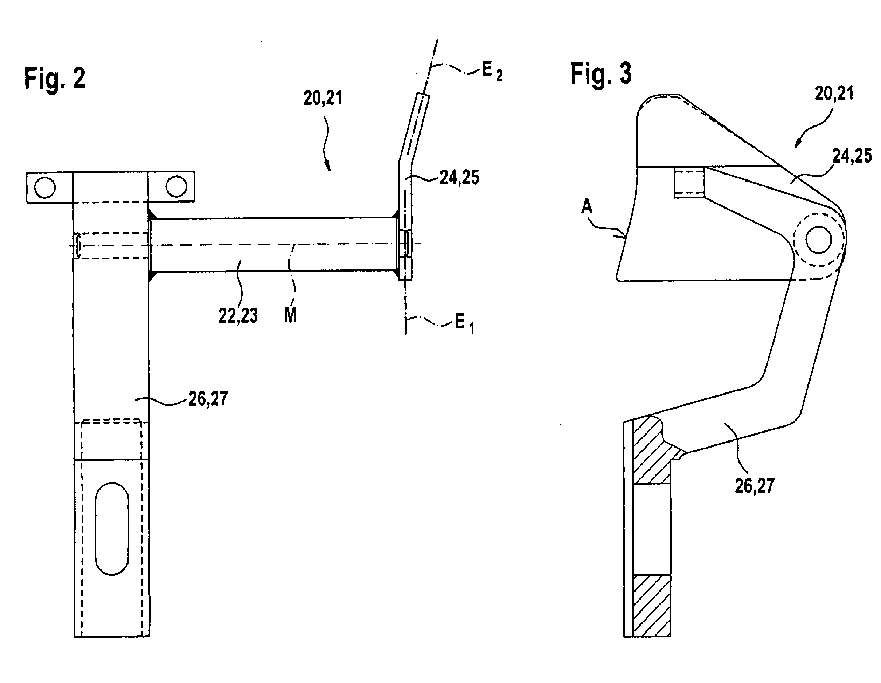

Jeder Klemmbügel 20, 21 ist aus einem Stützarm 22, 23 und einem Klemmelement 24, 25 gebildet. Der Stützarm 22, 23 ist bevorzugt zylindrisch ausgebildet, kann aber auch jede andere Form aufweisen. Die Mittelachse M des Stützarms 22, 23 verläuft vorzugsweise senkrecht zu einem Schwenkarm 26, 27 der Seitenbacken 16, 17 (siehe z.B. Figur 2), kann aber auch geneigt zum Schwenkarm 26, 27 verlaufen. Die Stützarme 22, 23 sind vorzugsweise fest mit den Klemmelementen 24, 25 verbunden. Die Klemmbügel 20, 21 können aber auch einstückig ausgebildet sein. Die Klemmelemente 24, 25, die in der gezeigten Ausführungsform als Blech ausgebildet sind, sind an die Kontur der Fischrümpfe angepasst. Wie insbesondere aus der Figur 3 ersichtlich, bildet eine Schmalseite eines Klemmelementes 24, 25 eine Anlagefläche A, die gekrümmt oder abgewinkelt ausgebildet oder in anderer Weise an die Kontur des Fischrumpfes angepasst ist. Selbstverständlich können die Klemmelemente 24, 25 auch in anderer Weise, beispielsweise als Klemmbacke, als Dorn oder dergleichen ausgebildet sein.

Die Klemmelemente 24, 25 bzw. die sie bildenden Bleche spannen eine erste Ebene E₁ auf. Die Mittelachse M des Stützarmes 22, 23 verläuft optional senkrecht zu der Ebene E₁. Diese Ausbildung kann aber auch variieren, indem das Blech unter Bildung einer zweiten Ebene E₂ abgewinkelt ausgebildet ist. Vorzugsweise knickt die Ebene E₂ in Bezug auf die Ebene E₁ in Richtung der Kopfstützeinheit 18, also weg von den Seitenbacken 16, 17 ab. Es sind aber ebenfalls anders geformte Bleche einsetzbar.

Mit Bezug auf die Darstellung gemäß Figur 1 wird der Fisch von der Bedienperson aus gesehen mit dem Rücken voraus, Kopf nach rechts in die still stehende und geöffnete Vorrichtung 10 eingelegt. Beim Einlegen wird der Fisch mit den seitlich abstehenden Brustflossen in Schwanzrichtung gegen die Anschläge 12, 13 gedrückt, so dass der Fisch in Längsrichtung positioniert ist. Wird die Vorrichtung 10 nun durch Rotation um eine Drehachse D in einer erste Bearbeitungsposition verfahren, bewegen sich die Seitenbacken 16, 17 aufeinander zu. Gleichzeitig bewegen sich entsprechend auch die Klemmbügel 20, 21 aufeinander zu. Durch die Bewegung der Seitenbacken 16, 17 wird die Rückenauflage 15 zwangsläufig angehoben. Die Seitenbacken 16, 17 und die Klemmbügel 20, 21 werden solange aufeinander zu bewegt, bis der Fisch fest eingespannt ist. Der Rumpf des Fisches ist dann sowohl vor den Brustflossen als auch hinter den Brustflossen fixiert, so dass der Fisch eine optimale Position unabhängig von äußeren Einflüssen und dem Zustand des Fisches aufweist.

## Patentansprüche

1. Vorrichtung (10) zum Aufnehmen und Fixieren von Fischen innerhalb einer Einrichtung zum Verarbeiten von Fischen, umfassend eine Rumpfklemmung (11) sowie eine aus mindestens zwei Anschlägen (12, 13) gebildete Brustflossenaufnahme (14), wobei die Rumpfklemmung (11) aus einer Aufnahmeposition in eine Klemmposition und umgekehrt bringbar ist, **dadurch gekennzeichnet, dass** ein zusätzliches Mittel (19) zur Fixierung des Fischrumpfes vorgesehen ist, wobei das zusätzliche Mittel (19) derart ausgebildet und eingerichtet ist, dass es vom Schwanz eines zu klemmenden Fisches aus gesehen hinter den Brustflossen am Fischrumpf anliegt.

2. Vorrichtung nach Anspruch 1, **dadurch gekennzeichnet, dass** das zusätzliche Mittel (19) zwei Klemmbügel (20, 21) umfasst, wobei die beiden Klemmbügel (20, 21) auf entgegen gesetzten Seiten des Fisches angeordnet sind.

3. Vorrichtung nach Anspruch 1 oder 2, **dadurch gekennzeichnet, dass** die Rumpfklemmung (11) aus einer Rückenauflage (15) und zwei Seitenbacken (16, 17) gebildet ist.

4. Vorrichtung nach Anspruch 3, **dadurch gekennzeichnet, dass** die Rückenauflage (15) und die Seitenbacken (16, 17) miteinander in Wirkverbindung stehen.

5. Vorrichtung nach Anspruch 3 oder 4, **dadurch gekennzeichnet, dass** die Seitenbacken (16, 17) aufeinander zu und voneinander weg bewegbar ausgebildet und eingerichtet sind.

6. Vorrichtung nach einem der Ansprüche 3 bis 5, **dadurch gekennzeichnet, dass** die Klemmbügel (20, 21) starr mit den Seitenbacken (16, 17) verbunden sind, derart, dass die Klemmbügel (20, 21) durch die Seitenbacken (16, 17) zwangsgesteuert sind.

7. Vorrichtung nach einem der Ansprüche 2 bis 6, **dadurch gekennzeichnet, dass** jeder Klemmbügel (20, 21) aus einem Stützarm (22, 23) und einem Klemmelement (24, 25) gebildet ist.

8. Vorrichtung nach Anspruch 7, **dadurch gekennzeichnet, dass** das Klemmelement (24, 25) an die Kontur der Fischrümpfe angepasst ist.

9. Vorrichtung nach Anspruch 7 oder 8, **dadurch gekennzeichnet, dass** das Klemmelement (24, 25) aus einem Blech gebildet ist.

10. Vorrichtung nach Anspruch 9, **dadurch gekennzeichnet, dass** das Blech zur Anlage am Fischrumpf mit einer Schmalseite angeordnet und eingerichtet ist.

11. Vorrichtung nach Anspruch 9 oder 10, **dadurch gekennzeichnet, dass** die Mittelachse M des Stützarmes (22, 23) senkrecht zu einer durch das Blech aufgespannten Ebene E₁ verläuft.

12. Vorrichtung nach einem der Ansprüche Anspruch 9 bis 11, **dadurch gekennzeichnet, dass** das Blech unter Aufspannung einer weiteren Ebene E₂ abgewinkelt ausgebildet ist.

## Claims

1. Apparatus (10) for receiving and fixing fish within a device for processing fish, comprising a trunk clamping means (11) and a pectoral fin receptacle (14) composed of at least two stops (12, 13), the trunk clamping means (11) being capable of being moved out of a receiving position into a clamping position and vice versa, **characterised in that** an additional means (19) is provided for fixing the fish trunk, wherein the additional means (19) is constructed and designed so as to abut against the fish trunk behind the pectoral fins, seen from the tail of a fish to be clamped.

2. Apparatus according to claim 1, **characterised in that** the additional means (19) comprises two clamping brackets (20, 21), the two clamping brackets (20, 21) being arranged on opposite sides of the fish.

3. Apparatus according to claim 1 or 2, **characterised in that** the trunk clamping means (11) is composed of a back support (15) and two side jaws (16, 17).

4. Apparatus according to claim 3, **characterised in that** the back support (15) and the side jaws (16, 17) are operatively connected to each other.

5. Apparatus according to claim 3 or 4, **characterised in that** the side jaws (16, 17) are constructed and designed so as to be movable towards and away from each other.

6. Apparatus according to any of claims 3 to 5, **characterised in that** the clamping brackets (20, 21) are rigidly connected to the side jaws (16, 17), in such a way that the clamping brackets (20, 21) are inevitably actuated by the side jaws (16, 17).

7. Apparatus according to any of claims 2 to 6, **characterised in that** each clamping bracket (20, 21) is composed of a support arm (22, 23) and a clamping element (24, 25).

8. Apparatus according to claim 7, **characterised in that** the clamping element (24, 25) is adapted to the contour of the fish trunks.

9. Apparatus according to claim 7 or 8, **characterised in that** the clamping element (24, 25) is composed of a metal sheet.

10. Apparatus according to claim 9, **characterised in that** the metal sheet is arranged and designed with one narrow side for abutment against the fish trunk.

11. Apparatus according to claim 9 or 10, **characterised in that** the centre axis M of the support arm (22, 23) runs perpendicularly to a plane E₁ spanned by the metal sheet.

12. Apparatus according to any of claims 9 to 11, **characterised in that** the metal sheet is angled, spanning a further plane E₂.

## Revendications

1. Dispositif (10) pour recevoir et fixer des poissons à l'intérieur d'une installation pour travailler des poissons, comprenant un blocage (11) de corps ainsi qu'un logement (14) de nageoires pectorales formé par au moins deux butées (12, 13), le blocage (11) de corps pouvant être amené d'une position de réception dans une position de blocage et inversement, **caractérisé en ce qu'**un moyen supplémentaire (19) est prévu pour fixer le corps du poisson, le moyen supplémentaire (19) étant constitué et aménagé de telle sorte que, vu depuis la queue d'un poisson à bloquer, il se trouve derrière les nageoires pectorales sur le corps du poisson.

2. Dispositif selon la revendication 1, **caractérisé en ce que** le moyen supplémentaire (19) inclut deux arceaux (20, 21) de blocage, les deux arceaux (20, 21) de blocage étant disposés sur des côtés opposés du poisson.

3. Dispositif selon la revendication 1 ou 2, **caractérisé en ce que** le blocage (11) de corps est formé d'un appui dorsal (15) et de deux mâchoires latérales (16, 17).

4. Dispositif selon la revendication 3, **caractérisé en ce que** l'appui dorsal (15) et les mâchoires latérales (16, 17) sont en liaison active l'un avec l'autre.

5. Dispositif selon la revendication 3 ou 4, **caractérisé en ce que** les mâchoires latérales (16, 17) sont constituées et aménagées de façon à pouvoir être rapprochées et éloignées l'une de l'autre.

6. Dispositif selon l'une des revendications 3 à 5, **caractérisé en ce que** les arceaux (20, 21) de blocage sont rigidement reliés aux mâchoires latérales (16, 17), de telle sorte que les arceaux (20, 21) de blocage soient commandés de force par les mâchoires latérales (16, 17).

7. Dispositif selon l'une des revendications 2 à 6, **caractérisé en ce que** chaque arceau (20, 21) de blocage est formé d'un bras-support (22, 23) et d'un élément (24, 25) de blocage.

8. Dispositif selon la revendication 7, **caractérisé en ce que** l'élément (24, 25) de blocage est adapté au contour du corps du poisson.

9. Dispositif selon la revendication 7 ou 8, **caractérisé en ce que** l'élément (24, 25) de blocage est constitué par une plaque de métal.

10. Dispositif selon la revendication 9, **caractérisé en ce que** la plaque de métal à placer sur le corps du poisson est agencée et équipée avec une face étroite.

11. Dispositif selon la revendication 9 ou 10, **caractérisé en ce que** l'axe centrale M du bras-support (22, 23) passe à la verticale d'un plan E₁ fixé à travers la plaque de métal.

12. Dispositif selon l'une des revendications 9 à 11, **caractérisé en ce que** la plaque de métal est constituée en coude par la fixation d'un autre plan E₂.
